# EUROPEAN PATENT APPLICATION

(11) **EP 4 848 429 A1**
(43) Date of publication of application: **02.12.2026**
(21) Application number: 26175186.1
(22) Date of filing: 28.04.2026
(51) Int. Cl.: H01M 50/242, B60K 1/04

(54) **VEHICLE UNDERBODY STRUCTURE**

(30) Priority: 29.05.2025 JP 2025090036
(71) Applicant: Toyota Jidosha Kabushiki Kaisha, Toyota-shi, Aichi-ken 471-8571 (JP)
(72) Inventor: KAWAMOTO, Naoya, Aichi-ken, 471-8571 (JP); TOMITA, Sintaro, Aichi-ken, 471-8571 (JP); HORIGUCHI, Kotaro, Aichi-ken, 471-8571 (JP)
(74) Representative: D Young & Co LLP

(57) **Abstract**

A vehicle underbody structure includes: a battery structure including a battery pack that is disposed at a lower part of a vehicle and houses a battery; and a sensor (acceleration sensor) provided on a vehicle front side relative to the battery structure and configured to detect an impact on the battery structure.

## Description

### BACKGROUND OF THE INVENTION

### 1. Field of the Invention

The present disclosure relates to a vehicle underbody structure.

### 2. Description of Related Art

Japanese Unexamined Patent Application Publication No. 2015-47917 (JP 2015-47917 A) describes a battery determination device including impact level detection means for detecting the level of an impact input to a battery.

### SUMMARY OF THE INVENTION

In the technology described in JP 2015-47917 A, an acceleration sensor is disposed inside a junction box near the center of gravity of a battery pack in a top view of a vehicle body and above a battery cross member.

However, there is room for improvement in detecting the input of an impact to a battery structure at the time of contact with a road surface, while distinguishing it from vibration of the vehicle during normal traveling.

The present disclosure has an object to detect the input of an impact to a battery structure at the time of contact with a road surface, while distinguishing it from vibration of a vehicle during normal traveling.

A vehicle underbody structure according to a first aspect includes: a battery structure including a battery pack that is disposed at a lower part of a vehicle and houses a battery; and a sensor provided on a vehicle front side relative to the battery structure and configured to detect an impact on the battery structure.

When the vehicle is traveling, impacts on the battery pack are often caused by contact of foreign objects on a road surface from the vehicle front side. In the vehicle underbody structure according to the first aspect, the sensor is provided on the vehicle front side relative to the battery structure. For example, vibration of the vehicle acts on the sensor, but an impact on the battery structure also acts on the sensor without being buried in the vibration of the vehicle. Therefore, it is possible to detect the input of the impact to the battery structure at the time of contact with the road surface, while accurately distinguishing it from the vibration of the vehicle during the normal traveling.

In a second aspect, in the vehicle underbody structure according to the first aspect, the sensor is provided inside the battery pack.

In the vehicle underbody structure according to the second aspect, the sensor can be protected from environmental changes outside the battery pack.

In a third aspect, in the vehicle underbody structure according to the second aspect, the battery pack includes a framework member extending in a vehicle front-rear direction, and the sensor is provided at a front part of the framework member.

In the vehicle underbody structure according to the third aspect, the sensor is provided at the front part of the vehicle framework member. Therefore, the position on the vehicle front side can be maintained stably.

In a fourth aspect, in the vehicle underbody structure according to the first aspect, the battery pack includes: a battery module in which a plurality of battery cells is arranged in a vehicle front-rear direction; and an end plate disposed at a front end of the battery module, and the sensor is provided on the end plate.

In the vehicle underbody structure according to the fourth aspect, the sensor is provided on the end plate. Therefore, the sensor can be stably maintained at the position on the vehicle front side.

In a fifth aspect, in the vehicle underbody structure according to the first aspect, the battery structure includes a panel that covers at least part of a lower surface of the battery pack, and the sensor is provided at a front part of the panel.

In the vehicle underbody structure according to the fifth aspect, by providing the sensor at the front part of the panel, it is easy to detect the input of the impact to the battery structure when a foreign object strikes the panel.

According to the present disclosure, it is possible to detect the input of an impact to the battery structure while distinguishing it from the vibration of the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view showing a vehicle underbody structure according to a first embodiment;
FIG. 2 is a sectional view showing the vehicle underbody structure according to the first embodiment;
FIG. 3 is a sectional view showing the vehicle underbody structure according to the first embodiment;
FIG. 4 is a plan view showing a vehicle underbody structure according to a second embodiment;
FIG. 5 is a sectional view showing the vehicle underbody structure according to the second embodiment; and
FIG. 6 is a sectional view showing a vehicle underbody structure according to a third embodiment.

### DETAILED DESCRIPTION OF EMBODIMENTS

Hereinafter, a vehicle underbody structure according to a first embodiment of the present disclosure will be described with reference to the drawings. In the following, the scope necessary for describing the technology of the present disclosure will be mainly described, and the parts that are omitted will be considered as being based on known technologies. Identical or corresponding components in the drawings are denoted by the same or similar signs, and redundant descriptions will be omitted. When a plurality of identical or corresponding components is included in the drawings, only some of them may be denoted by the signs for clarity of illustration. Arrows FR, UP, and LH in the drawings indicate a vehicle forward direction, a vehicle upward direction, and a vehicle leftward direction of a vehicle 10, respectively. Terms regarding directions of front-rear, up-down, and right-left when used in the following description indicate front-rear in a vehicle front-rear direction, up-down in a vehicle up-down direction, and right-left in a vehicle width direction (right-left direction), unless specified otherwise.

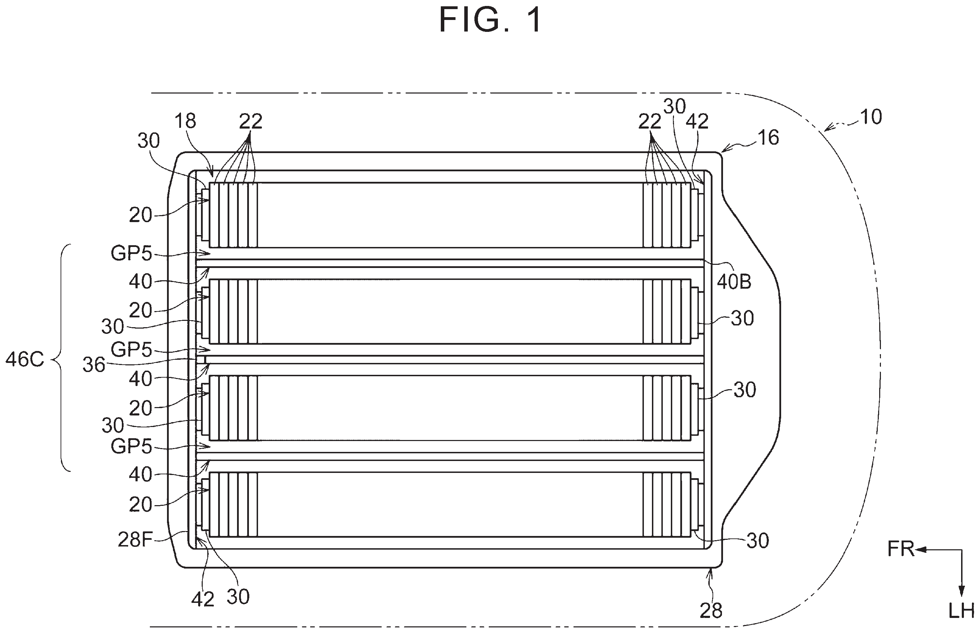

As shown in FIG. 1, a battery pack 18 is mounted on the vehicle 10 including a vehicle underbody structure 16 of the first embodiment. The battery pack 18 includes a plurality of battery modules 20 (four in the present embodiment). The battery modules 20 are arranged in the vehicle width direction. A space GP5 is defined between the battery modules 20. In the present embodiment, the number of battery modules 20 is four, and therefore the number of spaces GP5 defined between the battery modules 20 is three.

Each of the battery modules 20 includes a plurality of storage battery cells 22. The storage battery cells 22 are arranged in the battery module 20 in the vehicle front-rear direction. The battery modules 20 are housed in an internal space of a battery case 28 and are arranged in the vehicle width direction.

A shear panel 46 is disposed below the battery pack 18. The shear panel 46 is an example of a panel of the disclosed technology. In the present embodiment, the shear panel 46 covers at least part of the lower surface of the battery pack 18 to protect the battery pack 18 from foreign objects on a road surface, etc. The shear panel 46 is fixed to the battery case 28. In the present embodiment, a battery structure 12 includes the shear panel 46 and the battery pack 18.

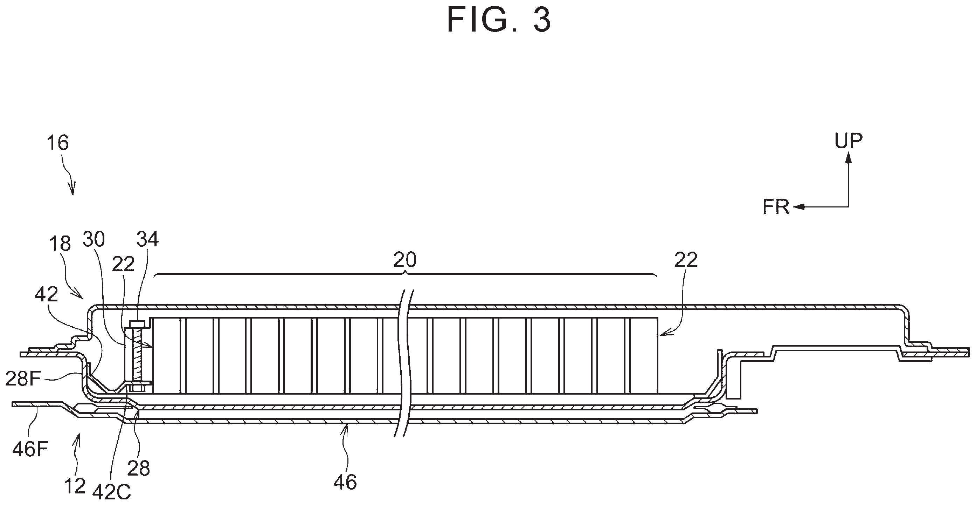

As shown in FIG. 3, in the present embodiment, the shear panel 46 includes a protruding portion 46F that protrudes to a vehicle front side beyond a front plate 28F of the battery case 28.

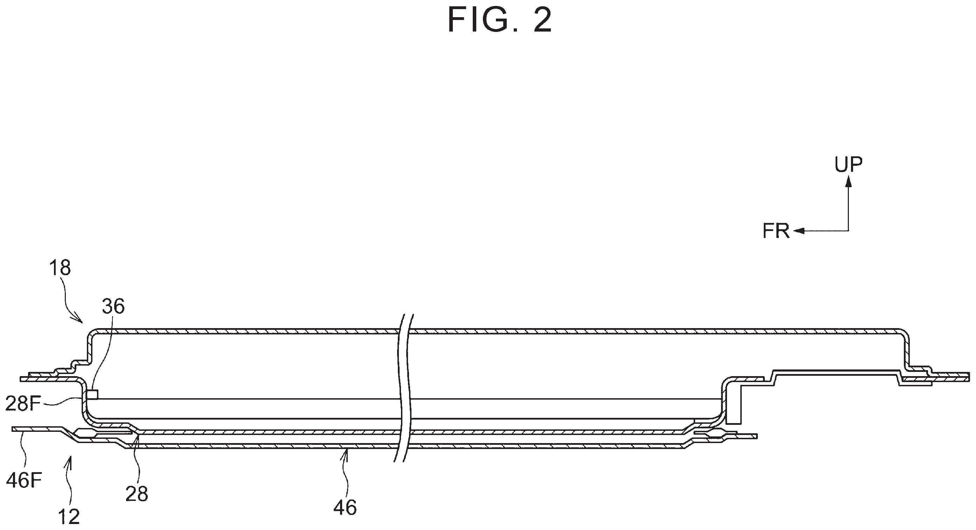

As shown in FIGS. 1 and 2, a reinforcing member 40 is disposed in each space GP5 between the battery modules 20. The reinforcing member 40 is an example of a framework member, and has higher rigidity than the battery case 28. The reinforcing member 40 has a substantially hat-shaped cross section that is open on the lower side. The front and rear ends of the reinforcing member 40 are fixed to the battery case 28 by fixing members (not shown). In this way, the reinforcing member 40 reinforces the battery pack 18. In the present embodiment, the reinforcing member 40 is located at a lower part of the battery pack 18 in the vehicle up-down direction, that is, below the midpoint of the battery pack 18 in the height direction. The open lower portion of the reinforcing member 40 is closed by a cell base 44.

End plates 30 are fixed to the front and rear ends of the battery module 20. The end plates 30 correspond to each battery module 20 and have approximately the same width as that of the battery module 20.

Joining members 42 are disposed on the vehicle front side and the vehicle rear side relative to the end plates 30. The joining member 42 has a length that spans a plurality of end plates 30 (four end plates 30 in the example shown in FIG. 1) in the vehicle width direction. The joining member 42 is joined to the battery case 28 by welding etc.

As shown in FIG. 3, the joining member 42 includes a joining piece 42C extending below the end plate 30. The end plate 30 is joined to the joining piece 42C by a bolt 34. In this way, the end plate 30 is fixed to the joining member 42.

In the present embodiment, an acceleration sensor 36 is attached to the reinforcing member 40 near the front end of the vehicle. The acceleration sensor 36 is a sensor that contains, for example, a weight inside and detects an acceleration by utilizing the movement of this weight. The acceleration sensor 36 is an example of a sensor of the disclosed technology.

In the example shown in FIG. 2, the acceleration sensor 36 is attached to the upper surface of the reinforcing member 40. The attachment position of the acceleration sensor 36 is not limited to this. For example, the attachment position may be the side surface of the reinforcing member 40. The attachment position may be the outside or inside of the substantially hat-shaped cross section.

In the example shown in FIG. 1, the acceleration sensor 36 is attached to the reinforcing member 40 located at the center in the vehicle width direction among the plurality of reinforcing members 40. The acceleration sensor 36 may be attached to each of the reinforcing members 40 on the right and left sides in the vehicle width direction. It is preferable to attach the acceleration sensor 36 to at least the reinforcing member 40 at the center in the vehicle width direction to accurately detect an impact on the battery structure 12.

Next, functions of the present embodiment will be described.

While the vehicle 10 is traveling forward, the battery structure 12 may be subjected to an impact, for example, due to contact with a foreign object from a road surface. When the vehicle 10 is traveling forward, the impact acts on the battery structure 12 from the vehicle front side. In the vehicle 10 to which the vehicle underbody structure 16 of the present embodiment is applied, the acceleration sensor 36 is attached to the reinforcing member 40 on the vehicle front side. When a foreign object strikes the shear panel 46, for example, from the vehicle front side, the impact acts on the reinforcing member 40 via the shear panel 46 and the battery case 28. Then, the acceleration sensor 36 attached to the reinforcing member 40 detects the impact. When a foreign object strikes the battery case 28 from the vehicle front side, the impact acts on the reinforcing member 40 from the battery case 28. In this case as well, the acceleration sensor 36 attached to the reinforcing member 40 detects the impact. Therefore, impacts acting on the battery structure 12 are more easily transmitted directly to the acceleration sensor 36 than, for example, in a configuration in which the acceleration sensor 36 is attached to the center of gravity of the battery structure 12 (near the center in the vehicle front-rear direction) or at a position near the rear end of the vehicle.

The acceleration sensor 36 detects an acceleration caused by vibration of the vehicle 10, for example, even when no impact acts on the battery structure 12 during normal traveling. As described above, however, the structure is such that the impact acting on the battery structure 12 at the time of contact with a road surface is easily transmitted to the acceleration sensor 36. Therefore, the input of the impact to the battery structure 12 can be detected while being distinguished from the vibration of the vehicle 10 during the normal traveling.

In the present embodiment, the impact acting on the battery structure 12 at the time of contact with a road surface can be detected while being distinguished from the vibration of the vehicle during the normal traveling. Therefore, damage to the battery structure 12 can be grasped using the detection result. For example, the vehicle types, regions, road conditions, vehicle speeds, etc. that are relatively prone to contact with road surfaces can be grasped to design a more durable battery structure 12 or change the attachment position in the vehicle 10.

In the first embodiment, the acceleration sensor 36 is attached to the reinforcing member 40. By attaching the acceleration sensor 36 to the reinforcing member 40 having high rigidity, the position of the acceleration sensor 36 can be maintained stably.

Next, a second embodiment will be described. In the second embodiment, the same elements, members, etc. as those in the first embodiment are denoted by the same reference numerals, and detailed description thereof will be omitted.

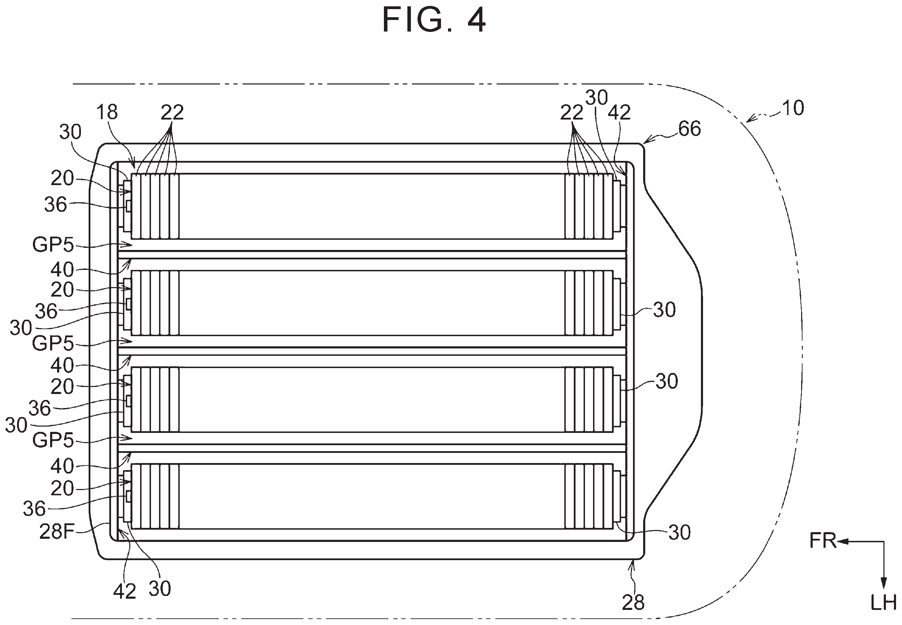

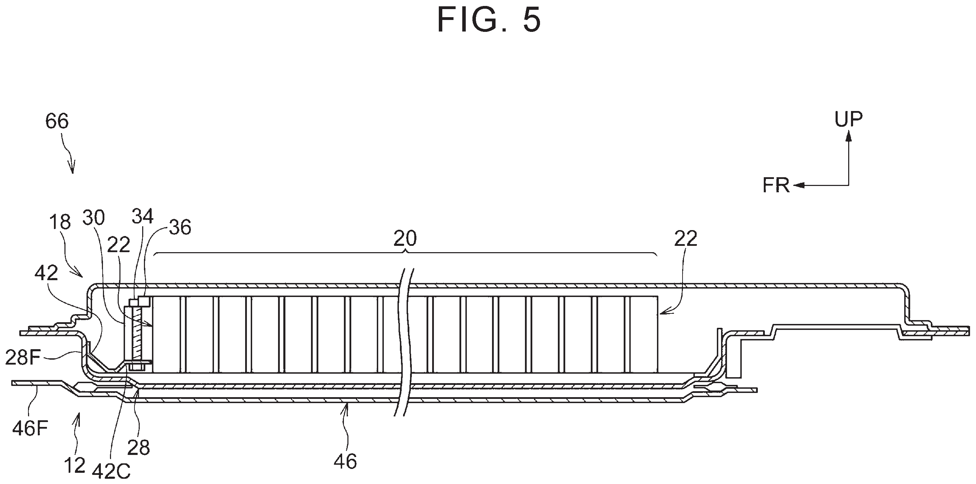

As shown in FIGS. 4 and 5, in a vehicle underbody structure 66 of the second embodiment, the acceleration sensor 36 is attached to the end plate 30 on the front end side.

In the second embodiment, when a foreign object strikes the shear panel 46, for example, from the vehicle front side, the impact acts on the end plate 30 via the shear panel 46, the battery case 28, and the joining member 42. Then, the acceleration sensor 36 attached to the end plate 30 detects the impact. When a foreign object strikes the battery case 28 from the vehicle front side, the impact acts on the end plate 30 from the battery case 28 via the joining member 42. In this case as well, the acceleration sensor 36 attached to the end plate 30 detects the impact. Therefore, in the second embodiment as well, impacts acting on the battery structure 12 are more easily transmitted directly to the acceleration sensor 36 than, for example, in a configuration in which the acceleration sensor 36 is attached to the center of gravity of the battery structure 12 or at a position near the rear end of the vehicle. It is possible to detect the input of the impact to the battery structure 12 at the time of contact with a road surface, while distinguishing it from the vibration of the vehicle 10 during the normal traveling.

In the second embodiment, the attachment position of the acceleration sensor 36 is not limited to the end plate 30, but may be, for example, the fastening portion between the end plate 30 and the joining member 42, that is, the position of the bolt 34. By attaching the acceleration sensor 36 to the end plate 30, the position of the acceleration sensor 36 can be maintained stably.

In the first and second embodiments, the acceleration sensor 36 is disposed inside the battery pack 18. Therefore, the acceleration sensor 36 can be protected from environmental changes outside the battery pack 18, such as changes in temperature, humidity, and air pressure, and ultraviolet rays, compared to a configuration in which the acceleration sensor 36 is disposed outside the battery pack 18.

Next, a third embodiment will be described. In the third embodiment as well, the same elements, members, etc. as those in the first embodiment are denoted by the same reference numerals, and detailed description thereof will be omitted.

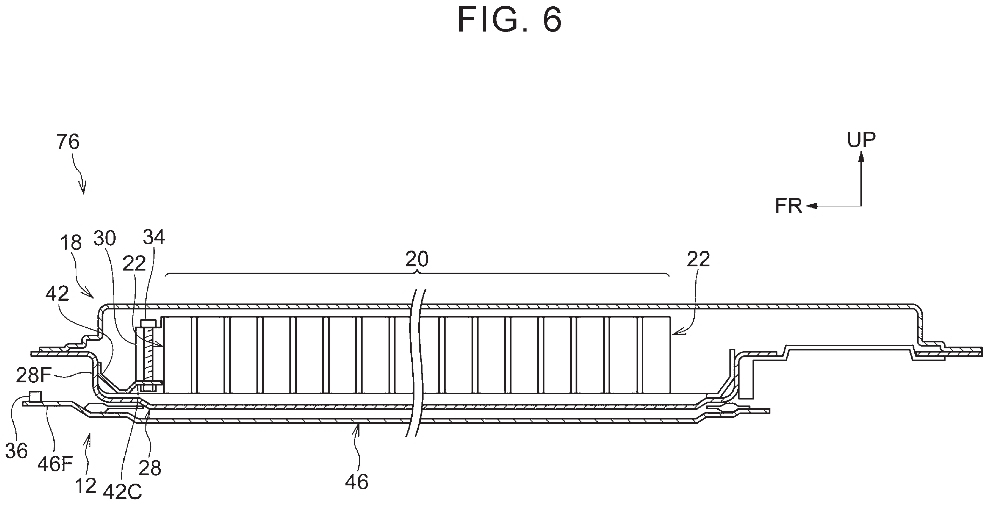

As shown in FIG. 6, in a vehicle underbody structure 76 of the third embodiment, the acceleration sensor 36 is attached to the protruding portion 46F of the shear panel 46. Although the acceleration sensor 36 is attached to the upper surface of the protruding portion 46F in FIG. 6, the acceleration sensor 36 may be attached to the lower surface of the protruding portion 46F.

In the third embodiment, when a foreign object strikes the shear panel 46, for example, from the vehicle front side, the acceleration sensor 36 directly detects the impact received by the shear panel 46. When a foreign object strikes the battery case 28 from the vehicle front side, the impact acts on the shear panel 46. Then, the acceleration sensor 36 attached to the shear panel 46 detects the impact. Therefore, in the third embodiment as well, impacts acting on the battery structure 12 are more easily transmitted directly to the acceleration sensor 36 than, for example, in a configuration in which the acceleration sensor 36 is attached to the center of gravity of the battery structure 12 or at a position near the rear end of the vehicle. It is possible to detect the input of the impact to the battery structure 12 at the time of contact with a road surface, while distinguishing it from the vibration of the vehicle 10 during the normal traveling.

In the third embodiment, the acceleration sensor 36 is attached to the shear panel 46. Therefore, when a foreign object strikes the shear panel 46, the impact can be detected easily.

In the third embodiment, the position in the vehicle width direction is not limited as the attachment position of the acceleration sensor 36, but a central portion 46C shown in FIG. 1 is preferable to reliably detect the impact from a foreign object. For example, the possibility of a foreign object striking the battery structure 12 is low at a position behind the front wheels of the vehicle 10, whereas the possibility of a foreign object striking the battery structure 12 is high at a position other than the position behind the front wheels.

Impacts on the battery structure 12 often occur when foreign objects on a road surface strike the lower surface of the battery structure 12. In any embodiment, the acceleration sensor 36 is disposed at the lower part of the battery structure 12. Therefore, it is easy to detect an impact caused by a foreign object striking the lower surface of the battery structure 12.

The acceleration sensor 36 is an example of the sensor of the disclosed technology. The sensor of the disclosed technology is not limited as long as it has a structure that can detect an impact on the battery structure 12. For example, the sensor may be configured such that two electrodes are disposed with a predetermined space therebetween and an impact is detected when the electrodes come into contact with each other due to the impact and become electrically conductive or when the capacitance between the electrodes changes. Alternatively, the sensor may be configured such that a gas is sealed in a flexible bag having a certain internal volume and an impact is detected when the internal pressure of the bag changes due to the impact. The sensor having the electrodes and the sensor having the bag are preferably disposed over a range with a certain width in the vehicle width direction to reliably detect an impact on the battery structure 12.

## Claims

1. A vehicle underbody structure comprising:
a battery structure including a battery pack that is disposed at a lower part of a vehicle and houses a battery; and
a sensor provided on a vehicle front side relative to the battery structure and configured to detect an impact on the battery structure.

2. The vehicle underbody structure according to claim 1, wherein the sensor is provided inside the battery pack.

3. The vehicle underbody structure according to claim 2, wherein:
the battery pack includes a framework member extending in a vehicle front-rear direction; and
the sensor is provided at a front part of the framework member.

4. The vehicle underbody structure according to claim 1, wherein:
the battery pack includes:
a battery module in which a plurality of battery cells is arranged in a vehicle front-rear direction; and
an end plate disposed at a front end of the battery module; and
the sensor is provided on the end plate.

5. The vehicle underbody structure according to claim 1, wherein:
the battery structure includes a panel that covers at least part of a lower surface of the battery pack; and
the sensor is provided at a front part of the panel.
